**Europäisches Patentamt**

**European Patent Office**

**Office européen des brevets**

(11) Veröffentlichungsnummer: **0 247 433**
**A2**

# (12) EUROPÄISCHE PATENTANMELDUNG

(21) Anmeldenummer: **87106905.0**

(22) Anmeldetag: **12.05.87**

(51) Int. Cl.⁴: **B23K 9/32**

(30) Priorität: **30.05.86 DE 3618250**

(43) Veröffentlichungstag der Anmeldung:
**02.12.87 Patentblatt 87/49**

(84) Benannte Vertragsstaaten:
**AT CH DE ES FR GB IT LI NL**

(71) Anmelder: **MAN GUTEHOFFNUNGSHÜTTE GMBH**
**Bahnhofstrasse, 66 Postfach 11 02 40**
**D-4200 Oberhausen 11(DE)**

(72) Erfinder: **Engel, Ulrich**
**Danziger Strasse 18**
**D-4200 Oberhausen 1(DE)**
Erfinder: **Veerbeck, Bernhard**
**Feldhofstrasse 2**
**D-4200 Oberhausen 11(DE)**

(54) **Vorrichtung zur Messung der Schweissvorschubgeschwindigkeit.**

(57) Vorrichtung zur Durchführung eines Verfahrens zur Messung und Steuerung der Vorschubgeschwindigkeit von Schweißautomaten oder Werkstücken, bei dem durch Reibungskraftschluß eine Relativbewegung zwischen dem Schweißkopf und der zu schweißenden Nahtfuge erfaßt wird. Dabei stellt der von einem dem Schweißkopf voreilenden, unter einem Anpreßdruck auf dem Werkstück abrollenden Reibrad abgegriffene Wert ein Maß für die Ist-Vorschubgeschwindigkeit dar und wird mechanisch in geschwindigkeitssynchrone Impulse umgesetzt, die mittels eines Kabelleiters aus der Wärmezone heraus und einem Sensor zugeführt werden, von diesem über Impulsvervielfachung in einen digitalen Anzeigewert umgewandelt werden und/oder mittels Verstärkeranordnung zur Beeinflussung der Relativgeschwindigkeit genutzt werden. Nach der Erfindung ist am Reibrad (3) ein Übersetzungsgetriebe (6) mit übereinander angeordneten formschlüssigen Rädern (4) zum Antrieb eines inkrementalen photoelektrischen Drehgebers (5) angeordnet, wobei der Drehgeber (5) die Drehbewegung in geschwindigkeitssynchrone elektrische Impulse umwandelt, die über Kupferkabelleiter (II) auf einen außerhalb der Wärmezone angeordneten digitalen Tachometer (9) und/oder einen Drucker (IO) übertragen und/oder über eine Verstärkeranordnung genutzt werden. Das Reibrad (3) besitzt zwei Laufrichtungen.

Fig. 1

## Vorrichtung zur Messung der Schweißvorschubgeschwindigkeit

Die Vorschubgeschwindigkeit des Schweißkopfes von Schweißautomaten ist beispielsweise von der Dicke der auszuführenden Schweißnaht, dem zu schweißenden Werkstoff und Schweißzusatzwerkstoff bzw. der Schweißelektrode, sowie der verwendeten Spannung und Stromstärke abhängig. Die Vorschubgeschwindigkeit des Schweißkopfes soll jedoch während der Ausführung der Schweißnaht in aller Regel konstant gehalten werden. Bei geradlinigen Schweißnähten bereitet dies deshalb keine Schwierigkeiten, weil die Vorschubgeschwindigkeit am Schweißautomaten fest eingestellt wird.

Schweißautomaten werden jedoch auch zur Herstellung von Schweißnähten verwendet, die nicht geradlinig, sondern kuvenförmig verlaufen. Handelt es sich dabei um Schweißnähte, die beispielsweise beim Schweißplattieren von kreisrunden Flächen, in Form einer Spirale verlaufen, oder aber um solche Schweißnähte, bei denen der spiralförmige Verlauf darin besteht, daß die Schweißraupen übereinander liegen und mit jeder vollen Umdrehung der von der Schweißraupe gebildete Ring einen größeren Durchmesser aufweist, dann verändert sich die Relativgeschwindigkeit zwischen dem Schweißkopf und dem zu - schweißenden Werkstück bei konstantem Schweißkopf-Vorschub stetig. Man hat bei derartigen Schweißungen dieser Schwierigkeit dadurch abzuhelfen versucht, daß die Vorschubgeschwindigkeit des Schweißkopfes von Zeit zu Zeit von Hand nachgestellt wurde. Bei dieser Verfahrensweise ergeben sich jedoch zwangsläufig sehr große und nicht ohne weiteres erkennbare Unregelmäßigkeiten und Schwankungen der Bewegungsgeschwindigkeit des Schweißkopfes gegenüber dem Werkstück.

Es hat auch nicht an Vorschlägen gefehlt, verbesserte Steuerverfahren für die Vorschubgeschwindigkeit von Schweißautomaten zu schaffen. Beispielsweise wird bei der Vorrichtung nach der US-PS 38 52 561 bei einer wellenförmigen Schweißkopfbewegung der jeweilige Momentan-Winkelwert durch ein Reibrad abgegriffen, welches auf ein Potentiometer arbeitet. Dabei wird durch die Potentiometerstellung die Drehzahl des Vorschubmotors beeinflußt und dadurch vektoriell die Vorschubgeschwindigkeit geregelt.

Eine ähnliche Verfahrensweise zeigt auch die US-PS 41 18 620, bei der Rollen auf je ein Potentiometer einwirken und einen Winkelwert erzeugen. Dieser wird jedoch nicht durch Rollenverschwenkung, sondern durch eine komplizierte Geschwindigkeits-Vektorrechnung aus den unterschiedlichen Rollenumdrehungen bei gekrümmter Bewegungsbahn erzeugt, so daß dabei der Weglängenabgriff über einen Rechenalgorithmus verwertet wird.

Bei der DE-AS 22 59 l79 werden durch photoelektrische Abtastung des Stoßverlaufs gewonnene Ausgangssignale durch eine elektrische Schaltungsanordnung in positive und negative Signale geformt, die der Nachführung der Schweißelektrode dienen.

Mit diesen Vorschlägen konnte eine einfache und betriebssichere Arbeitsweise zur sicheren Konstanthaltung der Vorschubgeschwindigkeit des Schweißkopfes an Schweißautomaten bei in ebenen und räumlichen Kurven verlaufenden Schweißnähten nicht erreicht werden. Der Verdrehwinkel der Abgriffsrolle bei der erstgenannten Vorrichtung hängt von mehreren Einflüssen ab und kann naturgemäß einen zuverlässigen Wert nicht ergeben, da die Verdrehkraft nur punktförmig auf die Rolle und deren Lagerung übertragen wird und von mehreren Einflüssen abhängig ist, wie z.B. Andruckkraft, Oberflächenbeschaffenheit, zweifacher Drehwiderstand und dergleichen mehr.

Bei der zweitgenannten Vorrichtung, bei der erhebliche Unsicherheitsmomente den ermittelten Winkelwert unkontrolliert beeinflussen können, wird zwar ein Weglängenabgriff vorgenommen, jedoch geschieht dies an einer Führungsschiene. Somit ist diese Vorrichtung für die Geschwindigkeitskonstrolle beim Rohrlagerschweißen nicht geeignet.

Bei dem Verfahren zur Messung und Steuerung der Vorschubgeschwindigkeit von Schweißautomaten (DE-PS 30 2l 659), bei dem durch Reibungs-Kraftschluß eine Relativbewegung zwischen dem Schweißkopf und der zu - schweißenden Nahtfuge erfaßt wird, stellt der abgegriffene Wert ein Maß für die IST-Vorschubgeschwindigkeit dar und wird mechanisch in geschwindigkeitssynchrone Lichtpulse umgesetzt, die mittels eines Glasfaserlichtleiters aus der Wärmezone heraus und einem Sensor zugeführt, von diesem in elektrische Größen umgewandelt, und digital oder/und analog angezeigt werden und/oder mittels Verstärkeranordnung zur Beeinflussung der Relativgeschwindigkeit dienen.

Zum Abgriff der Vorschubgeschwindigkeit dient ein dem Schweißkopf voreilendes, mit diesem verbundenes, unter Anpreßdruck auf dem Werkstück abrollendes Reibrad. Die Lichtpulse werden mittels einer einer mit Lichtdurchtrittsöffnungen versehenen, vom Reibrad angetriebenen Lochblende zugeordneten Lichtquelle erzeugt.

Wenn es auch mit der Vorrichtung zur Durchführung des zuletzt genannten Verfahrens möglich ist, Ungenauigkeiten der bekannten Verfahren zu vermeiden und eine einmal fest eingestellte Vorschubgeschwindigkeit des Schweißkopfes gegenüber der Schweißnaht konstant einzuhalten, unabhängig davon, wie groß die Absolutgeschwindigkeit zwischen der Schweißvorrichtung und dem Werkstück ist, so weist die Vorrichtung nach der DE-PS 30 2l 659 jedoch insofern Mängel auf, als daß ihre Anwendbarkeit gewissen Beschränkungen unterliegt. Mängel haben sich auch beim Engspaltschweißen hinsichtlich des Einbringens der Meßvorrichtung ergeben.

Aufgabe der Erfindung ist es daher, die Vorrichtung nach der DE-PS 30 2l 659 dahingehend zu verbessern, daß diese baulich so ausgebildet ist, daß sie auch bei tiefen Engspaltschweißnähten und in jeder Einbaulage verwendbar wird, und daß ferner die in der Vorrichtung zur Anwendung kommenden Einzelkomponenten zur Abnahme und Übertragung der Vorschubgeschwindigkeit so ausgewählt sind, daß eine möglichst vielseitige Anwendbarkeit gewährleistet ist.

Die erfindungsgemäße Vorrichtung zur Durchführung eines Verfahrens zur Messung und Steuerung der Vorschubgeschwindigkeit von Schweißautomaten oder Werkstücken, bei dem durch Reibungskraftschluß eine Relativbewegung zwischen dem Schweißkopf und der zu - schweißenden Nahtfuge erfaßt wird, wobei der von einem dem Schweißkopf voreilenden, unter einem Anpreßdruck auf dem Werkstück abrollenden Reibrad abgegriffene Wert ein Maß für die IST-Vorschubgeschwindigkeit darstellt und mechanisch in geschwindigkeitssynchrone Impulse umgesetzt wird, die mittels eines Kabelleiters aus der Wärmezone heraus und einem Sensor zugeführt werden, von diesem über Impulsvervielfachung in einen digitalen Anzeigewert umgewandelt werden und/oder mittels Verstärkeranordnung zur Beeinflussung der Relativgeschwindigkeit genutzt werden, sieht daher vor, daß am Reibrad ein Übersetzungsgetriebe mit übereinander angeordneten formschlüssigen Rädern zum Antrieb eines inkrementalen fotoelektrischen Drehgebers angeordnet ist, wobei der Drehgeber die Drehbewegung in geschwindigkeitssynchrone elektrische Impulse umwandelt, die über Kupferkabelleiter auf einen außerhalb der Wärmezone angeordneten digitalen Tachometer und/oder einen Drucker übertragen und/oder über eine Verstärkeranordnung zur Beeinflussung der Relativgeschwindigkeit genutzt werden.

Nach der Erfindung sind das Reibrad, Übersetzungsgetriebe und die übereinander angeordneten Räder in einem mehrteiligen, baukastenartigen Gehäuse untergebracht, das axial in einer Verstelleinheit zugestellt werden kann. In vorteilhafter Weise besitzt das Reibrad zwei Laufrichtungen. Es steht durch Federn bzw. Stoßdämpfer unter Anpreßdruck. Die Meß-und Steuereinrichtung kann in vorteilhafter Weise in jeder Lage eingebaut werden.

Bei der erfindungsgemäßen Vorrichtung wird der abgegriffene Wert als Maß der Vorschubgeschwindigkeit umgesetzt in geschwindigkeitssynchrone photoelektrische Impulse. Diese Impulse werden mit Hilfe eines inkrementalen Drehgebers erzeugt und mittels eines Kupferkabelleiters aus der Wärmezone heraus zur Anzeige gebracht.

Bei dem Drehgeber handelt es sich um ein handelsübliches Bauteil. Eine Glas-Teilscheibe mit einer Radialgitterteilung ist fest mit der drehbaren Geberwelle verbunden. Wird die Geberwelle gedreht, so werden durch photoelektrische Abtastung zwei sinusförmige Signalfolgen erzeugt. Diese Abtastsignale werden in einer Impulsformer-Elektronik verstärkt, durch Schmitt-Trigger in Rechteckimpulse umgeformt und über Kabeltreiber-Endstufen ausgegeben. Die beiden Ausgangssignal-Folgen als auch die dazu inversen Signalfolgen haben eine Phasenverschiebung von 90 el. (die in der nachfolgenden Auswerte-Elektronik zur Unterscheidung der Drehrichtung genutzt wird). Durch unterschiedliche Auswertung der Flanken beider Rechtecksignal-Folgen kann Vier-, Zwei-oder Einfach-Auswertung erreicht werden.

Ein Ausführungsbeispiel der Erfindung ist in der Zeichnung dargestellt und im folgenden erläutert. Es zeigen:

Fig. l eine Seitenansicht der Meßeinrichtung A und Verstelleinheit B und

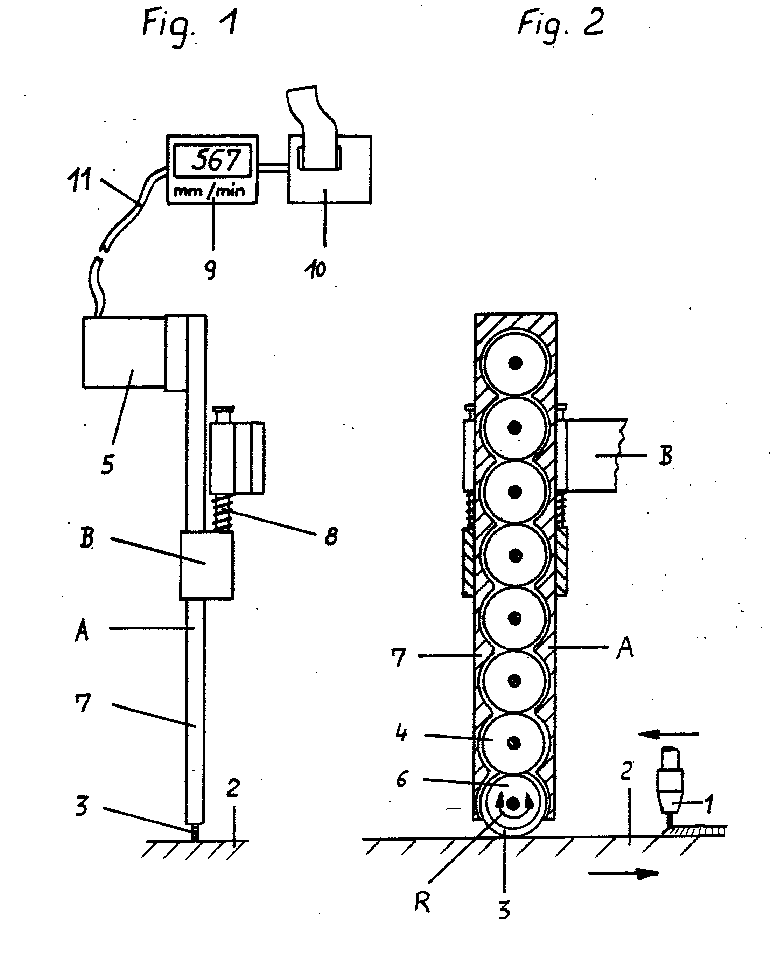

Fig. 2 einen Schnitt durch die Meßeinrichtung A und die Verstelleinheit B.

Die Meßeinrichtung (A) besteht aus dem Reibrad (3), das unter Vorspannung der Federn (8) steht, dem Übersetzungsgetriebe (6) mit übereinander angeordneten formschlüssigen Rädern (4) zum Antrieb des photoelektrischen Drehgebers (5). Die Teile (3), (6) und (4) sind in einem gemeinsamen Gehäuse (7) untergebracht. Die Abmessungen der Meßeinrichtung (A) sind so konzipiert, daß die Einrichtung auch beim Schweißen von tiefen Engspalten verwendbar ist.

Die Meßeinrichtung (A) ist mit ihrem Gehäuse (7) beliebig axial in der Verstelleinrichtung (B) zustellbar. Die Verstelleinrichtung (B) ist z.B. mit dem Schweißkopf verbindbar (nicht dargestellt).

Die im Drehgeber (5) aus einer Rotationsbewegung erzeugten elektrischen Impulse werden über einen Kupferkabelleiter (ll) auf einen digitalen Tachometer (9) zur Anzeige übertragen und/oder können durch einen Drucker (l0) ausgedruckt werden.

Die Meß-und Steuereinrichtung (A, B) läßt sich in beliebiger Lage einbauen.

## Ansprüche

l. Vorrichtung zur Durchführung eines Verfahrens zur Messung und Steuerung der Vorschubgeschwindigkeit von Schweißautomaten oder Werkstücken, bei dem durch Reibungskraftschluß eine Relativbewegung zwischen dem Schweißkopf und der zu schweißenden Nahtfuge erfaßt wird, wobei der von einem dem Schweißkopf voreilenden, unter einem Anpreßdruck auf dem Werkstück abrollenden Reibrad abgegriffene Wert ein Maß für die Ist-Vorschubgeschwindigkeit darstellt und mechanisch in geschwindigkeitssynchrone Impulse umgesetzt wird, die mittels eines Kabelleiters aus der Wärmezone heraus und einem Sensor zugeführt werden, von diesem über Impulsvervielfachung in einen digitalen Anzeigewert umgewandelt werden und/oder mittels Verstärkeranordnung zur Beeinflussung der Relativgeschwindigkeit genutzt werden,
dadurch gekennzeichnet,
daß am Reibrad (3) ein Übersetzungsgetriebe (6) mit übereinander angeordneten formschlüssigen Rädern (4) zum Antrieb eines inkrementalen fotoelektrischen Drehgebers (5) angeordnet ist, wobei der Drehgeber (5) die Drehbewegung in geschwindigkeitssynchrone elektrische Impulse umwandelt, die über Kupferkabelleiter (ll) auf einen außerhalb der Wärmezone angeordneten digitalen Tachometer (9) und/oder einen Drucker (l0) übertragen und/oder über eine Verstärkeranordnung zur Beeinflussung der Relativgeschwindigkeit genutzt werden.

2. Vorrichtung nach Anspruch l,
dadurch gekennzeichnet,
daß Reibrad (3), Übersetzungsgetriebe (6) und Räder (4) in einem Gehäuse (7) untergebracht sind, das axial in einer Verstelleinheit (B) zugestellt werden kann.

3. Vorrichtung nach den Ansprüchen l und 2,
dadurch gekennzeichnet,
daß das Reibrad (3) zwei Laufrichtungen besitzt und durch Federn bzw. Stoßdämpfer (8) unter Anpreßdruck steht.

4. Vorrichtung nach den Ansprüchen l bis 3,
dadurch gekennzeichnet,
daß die Meß-und Steuereinrichtung (A, B) einbaulageunabhängig ist.

Fig. 1

Fig. 2